# EUROPÄISCHE PATENTSCHRIFT

(11) **EP 2 181 218 B1**
(45) Veröffentlichungstag und Bekanntmachung des Hinweises auf die Patenterteilung: **11.12.2013**
(21) Anmeldenummer: 08735208.4
(22) Anmeldetag: 14.04.2008
(51) Int. Cl.: D21C 5/02, D21B 1/32

(54) **VERFAHREN UND VORRICHTUNG ZUR AUFBEREITUNG VON ALTPAPIER**
METHOD AND DEVICE FOR TREATING WASTE PAPER
PROCÉDÉ ET DISPOSITIF DE TRAITEMENT DE VIEUX PAPIERS

(30) Priorität: 14.04.2007 DE 102007017987
(43) Veröffentlichungstag der Anmeldung: 05.05.2010
(73) Patentinhaber: PTC Paper Technology Consulting GmbH, 74321 Bietigheim-Bissingen (DE)
(72) Erfinder: FAUL, Andreas, 74321 Bietigheim-Bissingen (DE); LAMBRECHT, Gerhard, 88273 Fronreute (DE)
(74) Vertreter: Lewandowsky, Klaus
(86) Internationale Anmeldenummer: PCT/EP2008/002926
(87) Internationale Veröffentlichungsnummer: WO 2008/125313

(56) Entgegenhaltungen:
- EP-A- 0 354 307
- EP-A- 0 653 510
- EP-A- 1 728 918
- EP-A- 1 731 662
- DE-A1- 2 908 660
- DE-A1- 10 256 519
- US-A- 4 915 821

## Beschreibung

Die vorliegende Erfindung betrifft ein Verfahren zum Aufbereiten von Altpapier, bei dem das Altpapier in Fasern aufgelöst wird, die Fasern in eine Langfaserfraktion und eine Kurzfaserfraktion fraktioniert werden, die Langfaserfraktion und die Kurzfaserfraktion einem Flotationsverfahren unterzogen werden, wobei die Langfaserfraktion vor dem Flotationsverfahren einer Dispergierung unterworfen wird. Die vorliegende Erfindung betrifft ferner eine Vorrichtung zum Aufbereiten von Altpapier, mit einer Auflösungsstufe zum Auflösen des Altpapiers in Fasern, einer Fraktioniereinrichtung zur Fraktionierung der Fasern in einen Langfaserstrom und einen Kurzfaserstrom und mindestens einer Flotationseinrichtung, wobei im Langfaserstrom der Flotationseinrichtung eine Dispergierstufe vorgeschaltet ist.

Heutzutage können aus Altpapier Papiere hergestellt werden, die hohen Qualitätsanforderungen genügen. Ein besonderes Problem hierbei ist die Entfernung der Druckfarben aus dem Altpapier ("Deinking"). Hierzu werden Flotationsverfahren eingesetzt, bei denen hydrophobe Farbteilchen in einem bestimmten Teilchengrößenbereich von den vereinzelten Papierfasern abgetrennt und verworfen werden. Dabei sollen möglichst alle Fasern, vor allem die für die Papierqualität wichtigen Langfasern, zurückbleiben. Mit diesen Flotationsverfahren können in der Regel alle diejenigen Druckfarben entfernt werden, die bei den wichtigsten Druckverfahren, nämlich Tiefdruck und Offsetdruck, verwendet werden.

Darüber hinaus gewinnen weitere Druckverfahren an Bedeutung, bei denen Druckfarben zum Einsatz kommen, die mit den gängigen Flotationsverfahren nicht entfernt werden können, weil sie nicht von der Faser abgelöst werden oder weil sie zu große oder zu kleine oder hydrophile Farbteilchen bilden. Dazu gehören bspw. UV-vernetzte Farben, Farben auf Pflanzenölbasis und Toner bzw. Flexadruckfarben und Tintenstrahldruckfarben. Um dieses Problem zu lösen, ist eine weitere Prozessstufe notwendig, in der die mit diesen Druckfarben behafteten Fasern dispergiert werden. Dabei werden die Farbteilchen von den Fasern abgelöst und gleichzeitig zerkleinert. Dadurch können sie in einem anschließenden Schritt durch ein übliches Flotationsverfahren von den Fasern abgetrennt werden. Diese zusätzliche Prozessstufe verbraucht allerdings alleine etwa 25% bis 30% der Energie, die für die gesamte Aufbereitung des Altpapiers aufgewendet werden muss. Außerdem ist diese zusätzliche Prozessstufe mit einem erheblichen Faserverlust verbunden.

Die EP 1 731 662 A1 beschreibt ein Verfahren zum Aufbereiten von Altpapier, bei dem die vereinzelten Fasern nach dem ersten Flotationsschritt fraktioniert, d.h. in eine Kurzfaserfraktion und eine Langfaserfraktion aufgeteilt werden. Die Kurzfaserfraktion enthält im Wesentlichen Kurzfasern sowie sonstige Fein- und Füllstoffe. Die Langfaserfraktion enthält neben den Langfasern im Wesentlichen größere Verunreinigungen wie klebende Teilchen ("Stickys"), Agglomerate und nicht abgelöste, noch auf den Langfasern haftende Druckfarben. Nur die Langfaserfraktion wird einer Dispergierung unterzogen. Die beiden Fraktionen werden im weiteren Verlauf des Verfahrens wieder vereinigt. Dabei werden die Faserverluste reduziert und Energie wird gespart, weil die Kurzfaserfraktion nicht mit dispergiert wird. Außerdem kann die Maschinengröße für die Dispergierung reduziert werden.

Ferner wurde eine Weiterbildung dieses Verfahrens bekannt, bei dem die Fraktionierung bereits vor dem ersten Flotationsverfahren erfolgt. Nachdem die Langfaserfraktion dispergiert und ggf. durch Sortierverfahren gereinigt wurde, werden beide Fraktionen gesondert jeweils einem einzigen Flotationsverfahren unterzogen. Das bisher notwendige zweite Flotationsverfahren entfällt vollständig, so dass zusätzlich Energie gespart wird und die beiden Anlagen für das Flotationsverfahren jeweils kleiner als bisher dimensioniert werden können.

Diese Weiterbildung hat jedoch den Nachteil, dass bei der Fraktionierung die bereits von den Fasern abgelösten Farbteilchen noch vollständig vorhanden sind, weil auf das bisher üblich erste Flotationsverfahren verzichtet wird. Daher können auch in der Langfaserfraktion bereits abgelöste Farbteilchen enthalten sein, die im Zuge des Aufbereitungsverfahrens mitgeschleppt werden. Diese Farbteilchen werden dann bei der Dispergierung weiter zerkleinert, so dass sie mit dem anschließenden Flotationsverfahren aufgrund ihrer dann zu geringen Teilchengröße nicht mehr vom Faserstoff bzw. von der Fasersuspension abgetrennt werden können. Die Dispergierung hat auf bereits abgelöste Teilchen die nachteilige Wirkung, dass sie sich wieder auf die Fasern aufziehen.

Die vorliegende Erfindung hat daher zum Ziel, ein gattungsgemäßes Verfahren bzw. eine gattungsgemäße Vorrichtung derart weiterzubilden, dass alle Farbteilchen zuverlässig entfernt werden.

Die Lösung besteht in einem Verfahren mit den Merkmalen des Patentanspruchs 1 sowie in einer Vorrichtung mit den Merkmalen des Patentanspruchs 14. Erfindungsgemäß ist vorgesehen, dass die Langfaserfraktion vor der Dispergierung einer Wäsche unterzogen wird, dass also der Dispergierstufe eine Waschstufe vorgeschaltet ist. Der Begriff Wäsche ist definiert als ein Fest-Fest-Trennvorgang, bei dem feine Teilchen von den Fasern abgetrennt werden. Hierfür geeignete Waschstufen sind als solche bekannt. Eine geeignete, bekannte Ausbildung einer solchen Waschstufe weist bspw. eine Zentralwalze mit einem umlaufenden Sieb auf. Der Faserstrom wird in einem Stoffverteiler geleitet und durch eine Düse in den Zwischenraum zwischen der sich drehenden Zentralwalze und dem umlaufenden Sieb gespritzt. Der Faserstrom wird durch die Siebspannung eingedickt, und das resultierende, die feinen Teilchen enthaltende Filtrat wird infolge der Zentrifugalkraft abgeschleudert und nach außen geleitet. Die gewaschenen und eingedickten Fasern werden von der Zentralwalze abgenommen und weiter verarbeitet.

Mit einer Wäsche können also die bei der Fraktionierung in den Langfaserstrom eingeschleppten abgelösten Farbteilchen zuverlässig von den Langfasern abgetrennt werden. Die im Verlauf des Verfahrens erhaltenen Fasern sind zur Herstellung von Papieren mit hoher Qualität besonders gut geeignet, weil Weißgrad und Sauberkeit erheblich verbessert werden. Das bei der Wäsche erhaltene Filtrat kann problemlos aufbereitet werden, so dass nur geringe Abfallmengen anfallen.

Vorteilhafte Weiterbildungen ergeben sich aus den Unteransprüchen.
Nach der Wäsche und vor der Dispergierung der Langfaserfraktion kann eine weitere Eindickung, bspw. eine Hochkonsistenzeindickung, erfolgen, um die Menge des durch die Dispergierstufe geleiteten Faserstroms weiter zu reduzieren. Dies ist besonders dann sinnvoll, wenn eine für die Dispersion optimale Stoffdichte eingestellt werden soll, damit eine bestmögliche Scherwirkung erzielt werden kann.

Die bei der Wäsche und/oder bei der Eindickung anfallende Flüssigkeit kann bspw. der Kurzfaserfraktion bzw. dem Kurzfaserstrom zugeführt werden und mit dem Kurzfaserstrom weiter verarbeitet werden. Die im Filtrat enthaltenen bei der Wäsche abgetrennten Farbteilchen können in einem üblichen Flotationsverfahren von den Kurzfasern abgetrennt werden. Bei dieser Variante kann es von Vorteil sein, den Kurzfaserstrom vor dem Flotationsverfahren einer Eindickung zu unterziehen, um das Volumen des Kurzfaserstroms zu reduzieren.

Es ist aber auch möglich, die bei der Wäsche und/oder bei der Eindickung anfallende Flüssigkeit nach der Dispergierung wieder der Langfaserfraktion zuzuführen, da die Langfaserfraktion nach der Dispergierung in der Regel ebenfalls die üblichen Flotations- und Weiterbehandlungsverfahren durchläuft. Die im Filtrat enthaltenen bei der Wäsche abgetrennten Farbteilchen können demnach auch von den dispergierten Langfasern abgetrennt werden.

Die Langfaserfraktion und die Kurzfaserfraktion können an einer beliebigen Stelle nach der Dispergierung der Langfaserfraktion wieder vereinigt werden. Bspw. können sie nach der Dispergierung der Langfaserfraktion wieder vereinigt und gemeinsam dem Flotationsverfahren unterzogen, weiterverarbeitet und einer Papiermaschine zugeführt werden. Die Langfaserfraktion und die Kurzfaserfraktion können aber auch getrennt jeweils einem Flotationsverfahren unterzogen werden. Dies hat den Vorteil, dass die jeweiligen Flotationsverfahren unter unterschiedlichen Bedingungen betrieben werden können, um das Spektrum der entfernbaren Druckfarben zu vergrößern, bspw. um besonders kleine Farbteilchen zu erfassen.

Die Langfaserfraktion und die Kurzfaserfraktion können nach dem jeweiligen Flotationsverfahren wieder vereinigt, gemeinsam weiterverarbeitet und einer Papiermaschine zugeführt werden. Die Langfaserfraktion und die Kurzfaserfraktion können aber auch weiterhin getrennt weiter verarbeitet werden und ggf. sogar nach der Weiterverarbeitung getrennt jeweils einer Papiermaschine zugeführt werden. Dies hat den Vorteil, dass die Fasern, ggf. in unterschiedlichen Mischungsverhältnissen, gezielt eingesetzt werden können, bspw. in Produkten mit unterschiedlichen Qualitätsanforderungen an das Papier oder in verschiedenen Lagen eines mehrlagigen Produkts.

Die Langfaserfraktion kann vor der Wäsche mindestens einer üblichen Sortierung unterworfen werden, um ggf. noch vorhandene Störstoffe zu entfernen. Aus dem gleichen Grund können auch die nach der Auflösung des Altpapiers erhaltenen Fasern vor der Fraktionierung mindestens einer Sortierung unterworfen werden.

Ausführungsbeispiele der vorliegenden Erfindung werden im Folgenden anhand der beigefügten Zeichnungen näher beschrieben. Es zeigen:
- Figur 1: ein Blockschema einer ersten Ausführungsform eines erfindungsgemäßen Verfahrens;
- Figur 2: ein Blockschema einer weiteren Ausführungsform eines erfindungsgemäßen Verfahrens;
- Figur 3: ein Blockschema einer weiteren Ausführungsform eines erfindungsgemäßen Verfahrens.

Die Blockschemata zeigen insgesamt drei Ausführungsformen des erfindungsgemäßen Verfahrens. Die hierzu verwendeten Maschinen und sonstigen Einrichtungen als solche sind dem Fachmann bekannt, so dass auf ihre ausführliche Beschreibung verzichtet wird.

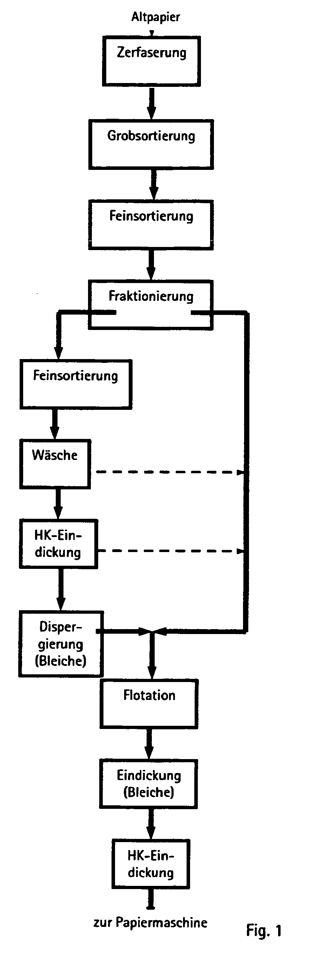

Figur 1 zeigt eine erste Ausführungsform des erfindungsgemäßen Verfahrens. Das Altpapier wird in einer Auflösungsstufe 10 in an sich bekannter Weise in Fasern aufgelöst Die erhaltenen Fasern liegen in einer Faserstoffmischung vor, die Kurzfasern und Langfasern enthält, wobei die Kurzfasern bereits von den Druckfarben befreit sind, während an den Langfasern noch nicht abgelöste Druckfarben haften können. In der Faserstoffmischung sind daher abgelöste Farbteilchen und darüber hinaus sonstige Fein- und Füllstoffe sowie größere Verunreinigungen wie klebende Teilchen ("Stickys") und papierfremde Bestandteile enthalten. Die Faserstoffmischung wird daher in an sich bekannter Weise in einer ersten Sortierstufe 11 einer Grobsortierung und, falls erforderlich, in einer zweiten Sortierstufe 12 einer Feinsortierung unterzogen, um Verunreinigungen wie klebende Teilchen oder papierfremde Bestandteile von den Fasern abzutrennen. Anschließend werden die Fasern einer Fraktioniereinrichtung 13 zugeführt, wo sie in eine Langfaserfraktion und eine Kurzfaserfraktion fraktioniert werden. Die beiden Fraktionen werden in der Folge getrennt in einem Kurzfaserstrom 14 und einem Langfaserstrom 15 geführt. Die in der ursprünglichen Faserstoffmischung enthaltenen abgelösten Farbteilchen sollten nun im Kurzfaserstrom 14 mitgeführt werden. Allerdings wird auch ein erheblicher Anteil an abgelösten Farbteilchen in den Langfaserstrom 15 eingeschleppt.

Der Langfaserstrom 15 kann, wenn nötig, in einer dritten Sortierstufe 16 einer weiteren Feinsortierung unterzogen werden. Dann wird der Langfaserstrom 15 erfindungsgemäß einer Waschstufe 17 zugeführt, wo er einer Wäsche unterzogen wird. Bei der Wäsche werden feine Feststoffteilchen von den Langfasern getrennt. Dabei werden auch die abgelösten Farbteilchen aus dem Langfaserstrom 15 entfernt, die bei der Fraktionierung fehlerhafterweise nicht dem Kurzfaserstrom 14 zugeführt worden sind. Die für die spätere Papierherstellung wichtigen Langfasern bleiben praktisch vollständig im Langfaserstrom 15 zurück. Das bei der Wäsche anfallende, u.a. die abgelösten Farbteilchen enthaltende Wasser wird über eine Leitung 18 in den Kurzfaserstrom 14 geleitet.

Nach der Wäsche ist es sinnvoll, den Langfaserstrom 15 in einer Eindickungsstufe 19 einer Hochkonsistenz-Eindickung zu unterziehen, um ihn auf eine für die Dispergierung geeignete Konsistenz zu bringen. Das bei der Eindickung anfallende Wasser wird über eine Leitung 20 in den Kurzfaserstrom 14 überführt. Dann wird der Langfaserstrom 15 in einer Dispergierstufe 21 in an sich bekannter Weise dispergiert. Dabei werden die an den Langfasern haftenden Druckfarben in Form kleiner Farbteilchen abgelöst. Die Farbteilchen sind nun einem Flotationsverfahren zugänglich, mit dem sie von den Fasern abgetrennt werden können. Gleichzeitig mit der Dispergierung können die Langfasern bspw. oxidativ gebleicht werden.
Nach der Dispergierung oder Bleiche werden im Ausführungsbeispiel der Kurzfaserstrom 14 und der Langfaserstrom 15 zu einem Faserstrom 22 vereinigt. Der Faserstrom 22 wird in einer Flotationseinrichtung 23 in an sich bekannter Weise einem Flotationsverfahren unterzogen. Dabei werden alle hydrophoben Feststoffe, deren Partikelgröße in etwa zwischen 5µm und 500µm im Durchmesser liegt, von den Fasern abgetrennt. Anschließend kann der so gereinigte Faserstrom 22 in einer Eindickvorrichtung 24, bspw. einem Scheibenfilter, eingedickt werden, und ggf. danach die Fasern gebleicht werden. Anschließend folgt eine Hochkonsistenz-Eindickung in einer weiteren Eindickstufe 25. Das resultierende Faservlies kann nun einer Papiermaschine zugeführt werden. Diese Papiermaschine kann insbesondere eine Blattbildungseinheit sein, die ein- oder mehrlagige Papierprodukte erzeugen kann, bspw. zweilagige Wellpappe oder vierlagigen Karton.

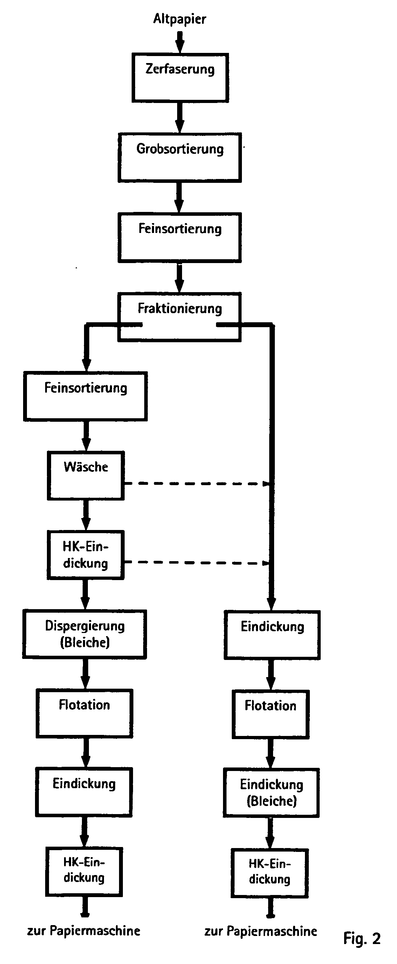

Figur 2 zeigt eine zweite Ausführungsform des erfindungsgemäßen Verfahrens. Die mit dem in Figur 1 gezeigten Ausführungsbeispiel identischen Verfahrensstufen sind mit denselben Bezugszeichen versehen. Das Altpapier wird wie in Figur 1 dargestellt, über eine Auflösungsstufe 10, eine erste Sortierstufe 11, ggf. eine zweite Sortierstufe 12 bis zu einer Fraktioniereinrichtung 13 geführt. Dort wird der erhaltene Faserstrom wiederum in eine Langfaserfraktion und eine Kurzfaserfraktion fraktioniert. Die beiden Fraktionen werden in der Folge getrennt in einem Kurzfaserstrom 14 und einem Langfaserstrom 15 geführt, im Unterschied zu dem in Figur 1 dargestellten Verfahren aber nicht wieder zu einem gemeinsamen Faserstrom 22 (vgl. Figur 1) vereinigt

Der Langfaserstrom 15 wird auf dieselbe Weise weiterverarbeitet, wie es in Figur 1 beschrieben ist. Der Langfaserstrom 15 wird also, ggf. über eine dritten Sortierstufe 16, einer Waschstufe 17 zugeführt, wo er einer Wäsche unterzogen wird. Das bei der Wäsche anfallende, u.a. die abgelösten Farbstoffteilchen enthaltende Wasser wird über eine Leitung 18 in den Kurzfaserstrom 14 geleitet. Anschließend wird der Langfaserstrom 15 in einer Eindickungsstufe 19 einer Hochkonsistenz-Eindickung unterzogen und dann in einer Dispergierstufe 21 in an sich bekannter Weise dispergiert. Gleichzeitig mit der Dispergierung können die Langfasern bspw. oxidativ gebleicht werden. Das in der Eindickungsstufe 19 anfallende Wasser wird über eine Leitung 20 dem Kurzfaserstrom 14 zugeführt.

Anschließend wird der Langfaserstrom 15 in einer separaten Flotationseinrichtung 23 in an sich bekannter Weise einem Flotationsverfahren unterzogen. Der gereinigte Langfaserstrom 15 wird in einer Eindickvorrichtung 24, bspw. einem Scheibenfilter, eingedickt. Danach folgt eine Hochkonsistenz-Eindickung in einer weiteren Eindickstufe 25. Das resultierende Faservlies kann nun einer Papiermaschine zugeführt werden.

Parallel hierzu wird der Kurzfaserstrom 14 auf eine vergleichbare Weise weiterverarbeitet, wobei nach der Fraktionierung in der Fraktioniereinrichtung 13 und nach dem Zulauf des Wassers aus den Leitungen 18, 20 eine weitere Eindickstufe 26 im Kurzfaserstrom 14 vorgesehen ist, um dessen Volumen vor dem Flotationsverfahren zu reduzieren. Der Durchlauf durch die Flotationseinrichtung 23', die Eindickvorrichtung 24' und die Eindickstufe 25' entspricht dem für den Langfaserstrom 15 beschriebenen Vorgehen. In der Eindickstufe 25' kann können die Kurzfasern bspw. reduktiv gebleicht werden.

Die jeweiligen Flotationseinrichtungen 23, 23' können hierbei mit unterschiedlichen Bedingungen betrieben werden, um Spektrum der entfernbaren Druckfarben zu vergrößern und insbesondere kleine Verunreinigungen abzutrennen.

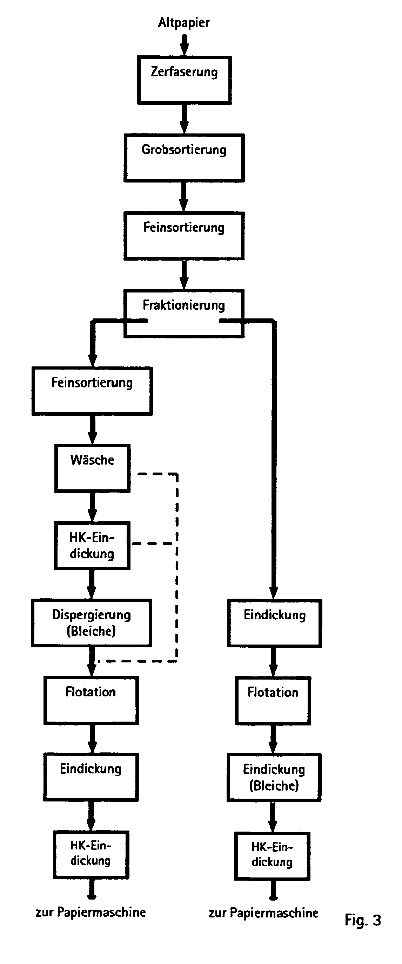

Figur 3 zeigt eine zweite Ausführungsform des erfindungsgemäßen Verfahrens. Die mit dem in Figur 2 gezeigten Ausführungsbeispiel identischen Verfahrensstufen sind mit denselben Bezugszeichen versehen. Der gesamte Ablauf des Verfahrens entspricht in den einzelnen Verfahrensstufen dem in Figur 2 dargestellten Verfahren. Der einzige Unterschied besteht darin, dass das aus der Waschstufe 17 und/oder der aus der Eindickungsstufe 19 ausgeleitete Wasser nicht in den Kurzfaserstrom 14, sondern über Leitungen 27, 28 in den Langfaserstrom 15 eingespeist wird, und zwar stromabwärts von der Dispergierstufe 21. Diese Maßnahme kann auch bei dem in Figur 1 gezeigten Ausführungsbeispiel ergriffen werden (nicht dargestellt).

## Patentansprüche

1. Verfahren zum Aufbereiten von Altpapier, bei dem das Altpapier in Fasern aufgelöst wird, die Fasern in eine Langfaserfraktion und eine Kurzfaserfraktion fraktioniert werden, die Langfaserfraktion und die Kurzfaserfraktion einem Flotationsverfahren unterzogen werden, wobei die Langfaserfraktion vor dem Flotationsverfahren einer Dispergierung unterworfen wird, **dadurch gekennzeichnet, dass** die Langfaserfraktion vor der Dispergierung einer Wäsche unterzogen wird.

2. Verfahren nach Anspruch 1, **dadurch gekennzeichnet, dass** nach der Wäsche und vor der Dispergierung der Langfaserfraktion eine Eindickung erfolgt.

3. Verfahren nach Anspruch 1 oder 2, **dadurch gekennzeichnet, dass** die bei der Wäsche und/oder bei der Eindickung anfallende Flüssigkeit der Kurzfaserfraktion zugeführt wird.

4. Verfahren nach Anspruch 1 oder 2, **dadurch gekennzeichnet, dass** die bei der Wäsche und/oder bei der Eindickung anfallende Flüssigkeit der Langfaserfraktion nach der Dispergierung zugeführt wird.

5. Verfahren nach einem der vorhergehenden Ansprüche, **dadurch gekennzeichnet, dass** zumindest die Kurzfaserfraktion vor dem Flotationsverfahren einer Eindickung unterzogen wird.

6. Verfahren nach einem der Ansprüche 1 bis 5, **dadurch gekennzeichnet, dass** die Langfaserfraktion und die Kurzfaserfraktion getrennt jeweils einem Flotationsverfahren unterzogen werden.

7. Verfahren nach Anspruch 6, **dadurch gekennzeichnet, dass** die Langfaserfraktion und die Kurzfaserfraktion nach dem Flotationsverfahren wieder vereinigt, gemeinsam weiterverarbeitet und einer Papiermaschine zugeführt werden.

8. Verfahren nach Anspruch 6, **dadurch gekennzeichnet, dass** die Langfaserfraktion und die Kurzfaserfraktion getrennt weiter verarbeitet werden.

9. Verfahren nach Anspruch 8, **dadurch gekennzeichnet, dass** die Langfaserfraktion und die Kurzfaserfraktion nach der Weiterverarbeitung getrennt jeweils einer Papiermaschine zugeführt werden.

10. Vorrichtung zum Aufbereiten von Altpapier mit einer Auflösungsstufe (10) zum Auflösen des Altpapiers in Fasern, einer Fraktioniereinrichtung (13) zur Fraktionierung der Fasern in einen Langfaserstrom (15) und einen Kurzfaserstrom (14) und mindestens einer Flotationseinrichtung (23, 23'), wobei im Langfaserstrom (15) der Flotationseinrichtung (23, 23') eine Dispergierstufe (21) vorgeschaltet ist, **dadurch gekennzeichnet, dass** der Dispergierstufe (21) eine Waschstufe (17) vorgeschaltet ist.

11. Vorrichtung nach Anspruch 10, **dadurch gekennzeichnet, dass** im Langfaserstrom (15) zwischen der Waschstufe(17) und der Dispergierstufe (21) eine Eindickungsstufe (19) vorgesehen ist.

12. Vorrichtung nach Anspruch 10 oder 11, **dadurch gekennzeichnet, dass** zumindest im Kurzfaserstrom (14) vor der Flotationseinrichtung (23, 23') eine Eindickungsstufe (26) vorgesehen ist.

13. Vorrichtung nach einem der Ansprüche 10 bis 12, **dadurch gekennzeichnet, dass** für den Langfaserstrom (15) und den Kurzfaserstrom (14) mindestens eine gemeinsame Verarbeitungsstufe (24, 25) vorgesehen ist.

14. Vorrichtung nach einem der Ansprüche 10 bis 12, **dadurch gekennzeichnet, dass** im Kurzfaserstrom (14) und im Langfaserstrom (15) jeweils mindestens eine dem jeweiligen Strom zugeordnete Verarbeitungsstufe (24, 24'; 25, 25') vorgesehen ist.

15. Vorrichtung nach Anspruch 14, **dadurch gekennzeichnet, dass** im Langfaserstrom (15) und im Kurzfaserstrom (14) jeweils eine Zufuhreinrichtung zu jeweils einer Papiermaschine vorgesehen ist.

## Claims

1. A method for the preparation of waste paper, in which the waste paper is resolved into fibres, the fibres are fractionated into a long fibre fraction and a short fibre fraction, and the long fibre fraction and the short fibre fraction undergo a flotation method, wherein
before the flotation method the long fibre fraction is subjected to a dispersion,
**characterised in that**,
before the dispersion the long fibre fraction undergoes a washing process.

2. The method in accordance with Claim 1,
**characterised in that**,
after the washing process and before the dispersion of the long fibre fraction a thickening process takes place.

3. The method in accordance with Claim 1 or 2,
**characterised in that**,
the fluid accruing during the washing process and/or during the thickening process is fed to the short fibre fraction.

4. The method in accordance with Claim 1 or 2,
**characterised in that**,
the fluid accruing during the washing process and/or during the thickening process is fed to the long fibre fraction after the dispersion.

5. The method in accordance with one of the preceding claims,
**characterised in that**,
before the flotation method at least the short fibre fraction undergoes a thickening process,

6. The method in accordance with one of the Claims 1 to 5,
**characterised in that**,
the long fibre fraction and the short fibre fraction each separately undergo a flotation method.

7. The method in accordance with Claim 6,
**characterised in that**,
after the flotation method the long fibre fraction and the short fibre fraction are reunified, are further processed together and fed to a paper machine.

8. The method in accordance with Claim 6,
**characterised in that**,
the long fibre fraction and the short fibre fraction are each separately further processed.

9. The method in accordance with Claim 8,
**characterised in that**,
after the further processing the long fibre fraction and the short fibre fraction are each separately fed to a paper machine.

10. A device for the preparation of waste paper, with a resolution stage (10) for purposes of resolving the waste paper into fibres, a fractionating facility (13) for purposes of fractionating the fibres into a long fibre stream (15) and a short fibre stream (14), and at least one flotation facility (23, 23'), wherein
in the long fibre stream (15) a dispersion stage (21) is located upstream of the flotation facility (23, 23'),
**characterised in that**,
a washing stage (17) is located upstream of the dispersion stage (21).

11. The device in accordance with Claim 10,
**characterised in that**,
in the long fibre stream (15) a thickening stage (19) is provided between the washing stage (17) and the dispersion stage (21).

12. The device in accordance with Claim 10 or 11,
**characterised in that**,
at least in the short fibre stream (14) a thickening stage (26) is provided upstream of the flotation facility (23, 23').

13. The device in accordance with one of the Claims 10 to 12,
**characterised in that**,
at least one common processing stage (24, 25) is provided for the long fibre stream (15) and the short fibre stream (14).

14. The device in accordance with one of the Claims 10 to 12,
**characterised in that**,
in the short fibre stream (14) and in the long fibre stream (15) at least processing stage (24, 24', 25, 25') is provided in each case, assigned to the stream in question.

15. The device in accordance with Claim 14,
**characterised in that**,
in the long fibre stream (15) and in the short fibre stream (14) a feed facility to a paper machine is provided in each case.

## Revendications

1. Procédé destiné au traitement de papier de récupération, lors duquel on fait se désagréger le papier de récupération en fibres, on fractionne les fibres en une fraction à fibres longues et en une fraction à fibres courtes, on soumet la fraction à fibres longues et la fraction à fibres courtes à un procédé de flottation, avant le procédé de flottation, la fraction à fibres longues étant soumise à une dispersion, **caractérisé en ce qu'**avant la dispersion, on soumet la fraction à fibres longues à un lavage.

2. Procédé selon la revendication 1, **caractérisé en ce qu'**après le lavage et avant la dispersion de la fraction à fibres longues, il s'effectue une gélification.

3. Procédé selon la revendication 1 ou la revendication 2, **caractérisé en ce qu'**on amène à la fraction à fibres courtes le liquide résultant du lavage et/ou de la gélification.

4. Procédé selon la revendication 1 ou la revendication 2, **caractérisé en ce qu'**après la dispersion, on amène à la fraction à fibres longues le liquide résultant du lavage et/ou de la gélification.

5. Procédé selon l'une quelconque des revendications précédentes, **caractérisé en ce qu'**on soumet au moins la fraction à fibres courtes à une gélification, avant le procédé de flottation.

6. Procédé selon l'une quelconque des revendications 1 à 5, **caractérisé en ce qu'**on soumet la fraction à fibres longues et la fraction à fibres courtes chacune séparément à un procédé de flottation.

7. Procédé selon la revendication 6, **caractérisé en ce qu'**après le procédé de flottation, on soumet en commun à un traitement ultérieur la fraction à fibres longues et la fraction à fibres courtes de nouveau réunies et on les amène à une machine à papier.

8. Procédé selon la revendication 6, **caractérisé en ce qu'**on soumet séparément la fraction à fibres longues et la fraction à fibres courtes à une transformation ultérieure.

9. Procédé selon la revendication 8, **caractérisé en ce qu'**après la transformation ultérieure, on amène la fraction à fibres longues et la fraction à fibres courtes chacune séparément à une machine à papier.

10. Dispositif destiné au traitement de papier de récupération avec une étape de désagrégation (10), pour désagréger le papier récupéré en fibres, un dispositif de fractionnement (13) pour fractionner les fibres en un flux à fibres longues (15) et en un flux à fibres courtes (14) et avec au moins un dispositif de flottation (23, 23'), dans le flux à fibres longues (15) du dispositif de flottation (23, 23'), une étape de dispersion (21) étant montée en amont, **caractérisé en ce qu'**en amont de l'étape de dispersion (21) est montée une étape de lavage (17).

11. Dispositif selon la revendication 10, **caractérisé en ce que** dans le flux à fibres longues (15), entre l'étape de lavage (17) et l'étape de dispersion (21), il est prévu une étape de gélification (19).

12. Dispositif selon la revendication 10 ou la revendication 11, **caractérisé en ce qu'**au moins dans le flux à fibres courtes (14), avant le dispositif de flottation (23, 23'), il est prévu une étape de gélification (26).

13. Dispositif selon l'une quelconque des revendications 10 à 12, **caractérisé en ce que** pour le flux à fibres longues (15) et pour le flux à fibres courtes (14), il est prévu au moins une étape de transformation (24, 25) commune.

14. Dispositif selon l'une quelconque des revendications 10 à 12, **caractérisé en ce que** dans le flux à fibres courtes (14) et dans le flux à fibres longues (15), il est prévu chaque fois au moins une étape de transformation (24, 24) ; 25, 25') associée au flux concerné.

15. Dispositif selon la revendication 14, **caractérisé en ce que** dans le flux à fibres longues (15) et dans le flux à fibres courtes (14), il est prévu chaque fois un dispositif d'alimentation vers chaque fois une machine à papier.
